# EUROPEAN PATENT APPLICATION

(11) **EP 3 474 122 A1**
(43) Date of publication of application: **24.04.2019**
(21) Application number: 18199823.8
(22) Date of filing: 11.10.2018
(51) Int. Cl.: G06F 3/0354

(54) **STYLUS, SYSTEM COMPRISING A CAPACITIVE STYLUS AND A TOUCH-SENSITIVE INPUT DEVICE**

(30) Priority: 18.10.2017 CN 201710969746
(71) Applicant: Coretronic Corporation, Hsin-Chu 300 (TW)
(72) Inventor: WU, Chia-Cheng, 300 Hsin-Chu (TW); KUO, Pen-Ning, 300 Hsin-Chu (TW)
(74) Representative: Ter Meer Steinmeister & Partner

(57) **Abstract**

A stylus including a pen rod, an ink core, and an electrically conductive element and a touch system are provided. The pen rod has an opening and the material thereof includes an electrically conductive material. The ink core is partially disposed inside the pen rod and a section of the ink core protrudes out of the opening. A terminal of the section is adapted to touch a touch writing surface to form an ink script on the touch writing surface. The electrically conductive element is disposed at the opening of the pen rod and includes a ring-shaped portion located between the opening of the pen rod and the terminal of the section. When the terminal of the ink core touches the touch writing surface, a gap is maintained between the ring-shaped portion and the touch writing surface and a touch sensing signal is generated.

## Description

This application claims the priority of China application NO. 201710969746.7 filed on October 18,2017.

### BACKGROUND OF THE INVENTION

### 1. Field of the Invention

The invention relates to a stylus and a touch system having the same, and more particularly relates to a stylus including an ink core and a touch system having the stylus.

### 2. Description of Related Art

In a conventional touch system, a user may generally deliver a signal by using an input device (including a capacitive stylus and a human finger), and the signal is then transmitted to a computer device through a display device having a capacitive touch function, so as to achieve the information delivery and interaction between the user and the touch system. A whiteboard pen can be used to directly write on a whiteboard and deliver a message by tangible scripts without any conversion of the scripts performed by other electronic devices.

Nevertheless, a whiteboard pen may generate an ink script which is not applicable for the display device having the capacitive touch function. Besides, a current stylus may be sensed by the display device having a capacitive touch function, and the trajectory of the stylus is then displayed by using a display device or through a projection method. The stylus is different from an ordinary whiteboard pen whose scripts are display by way of ink.

The information disclosed in this Background section is only for enhancement of understanding of the background of the described technology and therefore it may contain information that does not form the prior art that is already known to a person of ordinary skill in the art. Further, the information disclosed in the Background section does not mean that one or more problems to be resolved by one or more embodiments of the invention were acknowledged by a person of ordinary skill in the art.

### SUMMARY OF THE INVENTION

The invention provides a stylus having a function of providing both an ink script and an electronic script.

The invention further provides a touch system including the stylus having the function of providing both the ink script and the electronic script.

Other features and advantages of the embodiments of the invention may be further appreciated from the technical features disclosed by the invention.

The object is solved by the features of the independent claims. Preferred embodiments are given in the dependent claims.

In order to achieve one or a portion of or all of the objects or other objects, one embodiment of the invention is directed to a stylus adapted for a touch writing surface having a capacitive touch function. The stylus includes a pen rod, an ink core, and an electrically conductive element. The pen rod has an opening, and the material of the pen rod includes an electrically conductive material. The ink core is disposed inside the pen rod. A section of the ink core protrudes out of the opening of the pen rod, and a terminal of the section is adapted to touch a touch writing surface to form an ink script on the touch writing surface. The electrically conductive element is disposed at the opening of the pen rod. The electrically conductive element includes a ring-shaped portion. The ring-shaped portion is located between the opening of the pen rod and the terminal of the section, and when the terminal of the section touches the touch writing surface, a gap is maintained between the ring-shaped portion of the electrically conductive element and the touch writing surface and a touch sensing signal is generated.

In some embodiments, the touch sensing signal generated by the electrically conductive element is adapted to be transmitted to an electronic device by using the touch writing surface.

Preferably, a trajectory information corresponding to the ink script is displayed or stored by the electronic device based on the touch sensing signal.

In some embodiments, the pen rod is electrically connected to the electrically conductive element.

In some embodiments, the stylus may further comprise a decoration layer.

Preferably, the decoration layer is disposed on the pen rod.

Preferably, a material of the decoration layer comprises an electrically conductive material.

In some embodiments, the electrically conductive element has a through hole.

Preferably, the section of the ink core penetrates through the through hole and protrudes from the ring-shaped portion of the electrically conductive element.

Preferably, a hole diameter of the through hole is greater than an external diameter of the ink core.

Preferably, the electrically conductive element further comprises a mounting member.

Preferably, the mounting member is connected to the ring-shaped portion and assembled to the pen rod.

Preferably, the electrically conductive element is adapted to move with respect to the pen rod by using the mounting member so that the gap between the ring-shaped portion and the terminal of the section is changed.

Preferably, the mounting member comprises a plurality of flexible pieces.

Preferably, the plurality of flexible pieces extend from the ring-shaped portion and enter the pen rod through the opening.

Preferably, the plurality of flexible pieces abuts against an inner wall of the pen rod by the flexible force of the plurality of flexible pieces.

In some embodiments, a slot is formed between any two adjacent ones of the plurality of flexible pieces

In some embodiments, the plurality of flexible pieces surround the ink core, and a space is provided between the plurality of flexible pieces and the ink core.

In some embodiments, the gap between the ring-shaped portion of the electrically conductive element and the terminal of the section is greater than 0 mm and not greater than 20 mm.

In some embodiments, the ring-shaped portion comprises a plurality of protrusions, the plurality of protrusions protruding towards the terminal of the section of the ink core, and when the terminal of the section touches the touch writing surface, the plurality of protrusions touch the touch writing surface.

In some embodiments, the electrically conductive element further comprises a mounting member and an elastic member, the elastic member is connected between the mounting member and the ring-shaped portion, and the mounting member is assembled to the pen rod.

In some embodiments, the height of each of the plurality of protrusions ranges between 15 mm and 50 mm.

In some embodiments, the stylus may further comprise an identification element.

In some embodiments, the identification element is disposed inside the pen rod for providing an identification signal to an identification device.

In order to achieve one or a portion of or all of the objects or other objects, one embodiment of the invention is directed to a touch system including a touch writing surface and a stylus. The touch writing surface has a capacitive touch function. The stylus includes a pen rod, an ink core, and an electrically conductive element. The pen rod has an opening, and a material of the pen rod includes an electrically conductive material. The ink core is disposed inside the pen rod, a section of the ink core protrudes out of the opening of the pen rod, and a terminal of the section is adapted to touch the touch writing surface to form an ink script on the touch writing surface. The electrically conductive element is disposed at the opening of the pen rod. The electrically conductive element includes a ring-shaped portion. The ring-shaped portion is located between the opening of the pen rod and the terminal of the section, and when the terminal of the section touches the touch writing surface, a gap is maintained between the ring-shaped portion of the electrically conductive element and the touch writing surface and a touch sensing signal is generated.

In some embodiments, the touch system further comprises an electronic device configured to receive the touch sensing signal from the touch writing surface,

Preferably, the electronic device is adapted to display or store a trajectory information corresponding to the ink script based on the touch sensing signal.

In some embodiments, the pen rod is electrically connected to the electrically conductive element.

In some embodiments, the stylus further comprises a decoration layer.

Preferably, the decoration layer being is disposed on the pen rod.

Preferably, a material of the decoration layer comprises an electrically conductive material.

In some embodiments, the electrically conductive element has a through hole.

Preferably, the section of the ink core penetrates through the through hole and protrudes from the ring-shaped portion of the electrically conductive element.

In some embodiments, a hole diameter of the through hole is greater than an external diameter of the ink core.

In some embodiments, the electrically conductive element further comprises a mounting member.

Preferably, the mounting member is connected to the ring-shaped portion and assembled to the pen rod, and the electrically conductive element is adapted to move with respect to the pen rod by using the mounting member so that the gap between the ring-shaped portion and the terminal of the section is changed.

In some embodiments, the mounting member comprises a plurality of flexible pieces, the plurality of flexible pieces extending from the ring-shaped portion and entering the pen rod through the opening, and the plurality of flexible pieces abuts against an inner wall of the pen rod by the flexible force of the plurality of flexible pieces.

Preferably, a slot is formed between any two adjacent ones of the plurality of flexible pieces, the plurality of flexible pieces surround the ink core, and a space is provided between the plurality of flexible pieces and the ink core.

Preferably, the gap between the ring-shaped portion of the electrically conductive element and the terminal of the section is greater than 0 mm and not greater than 20 mm.

Preferably, the ring-shaped portion comprises a plurality of protrusions.

Preferably, the plurality of protrusions protruding towards the terminal of the section of the ink core, and when the terminal of the section touches the touch writing surface, the plurality of protrusions touch the touch writing surface.

Preferably, the electrically conductive element further comprises a mounting member and an elastic member.

Preferably, the elastic member is connected between the mounting member and the ring-shaped portion, and the mounting member is assembled to the pen rod.

Preferably, the height of each of the plurality of protrusions ranges between 15 mm and 50 mm.

Preferably, the system further comprises an identification device.

Preferably, the stylus further comprises an identification element disposed inside the pen rod for providing an identification signal to the identification device, and the identification device is adapted to identify the identification element.

To sum up, the embodiments of the invention have at least one of the following advantages or effects. In a stylus provided by the embodiments of the invention, the ring-shaped portion of the electrically conductive element is located between the opening of the pen rod and the terminal of the ink core, such that when the terminal of the ink core touches the touch writing surface, a gap is maintained between the ring-shaped portion of the electrically conductive element and the touch writing surface, so as to prevent the ring-shaped portion of the electrically conductive element from touching and damaging the ink script formed by the ink core on the touch writing surface. In this way, a complete ink script can be formed smoothly on the touch writing surface as a touch sensing signal is simultaneously generated between the electrically conductive element and the touch sensing surface.

Other objectives, features and advantages of the present invention will be further understood from the further technological features disclosed by the embodiments of the present invention wherein there are shown and described preferred embodiments of this invention, simply by way of illustration of modes best suited to carry out the invention.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a schematic diagram of a touch system according to an embodiment of the invention.
FIG. 2 is a schematic side view of the stylus of FIG. 1.
FIG. 3 is an exploded view of the stylus of FIG. 2.
FIG. 4 is a partially enlarged view of the stylus of FIG. 2 in an area A.
FIG. 5 is a perspective view of the electrically conductive element of the stylus of FIG. 2.
FIG. 6 is a top view of the stylus of FIG. 2.
FIG. 7 is a partially enlarged view of a stylus according to another embodiment of the invention.
FIG. 8 is a front view of the stylus of FIG. 7.
FIG. 9 is a partially enlarged view of the stylus of FIG. 7 in an area B.
FIG. 10 is a schematic diagram of a touch system according to another embodiment of the invention.

### DESCRIPTION OF THE EMBODIMENTS

In the following detailed description of the preferred embodiments, reference is made to the accompanying drawings which form a part hereof, and in which are shown by way of illustration specific embodiments in which the invention may be practiced. In this regard, directional terminology, such as "top," "bottom," "front," "back," etc., is used with reference to the orientation of the Figure(s) being described. The components of the present invention can be positioned in a number of different orientations. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the present invention. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted" and variations thereof herein are used broadly and encompass direct and indirect connections, couplings, and mountings. Similarly, the terms "facing," "faces" and variations thereof herein are used broadly and encompass direct and indirect facing, and "adjacent to" and variations thereof herein are used broadly and encompass directly and indirectly "adjacent to". Therefore, the description of "A" component facing "B" component herein may contain the situations that "A" component directly faces "B" component or one or more additional components are between "A" component and "B" component. Also, the description of "A" component "adjacent to" "B" component herein may contain the situations that "A" component is directly "adjacent to" "B" component or one or more additional components are between "A" component and "B" component. Accordingly, the drawings and descriptions will be regarded as illustrative in nature and not as restrictive.

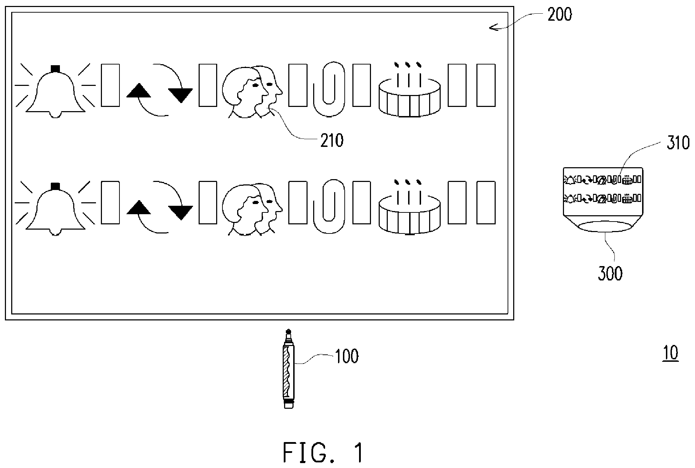

FIG. 1 is a schematic diagram of a touch system according to an embodiment of the invention. With reference to FIG. 1, a touch system 10 of this embodiment includes a stylus 100 and a touch writing surface 200, and the touch writing surface 200 has a capacitive touch function. The stylus 100 can provide a touch input on the touch writing surface 200 and write an ink script on the touch writing surface 200.

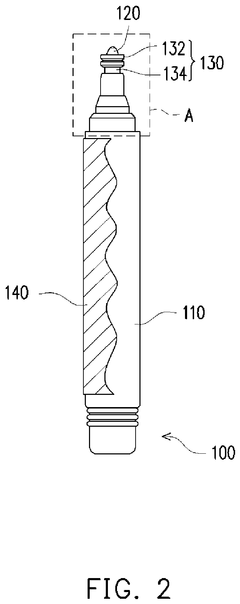

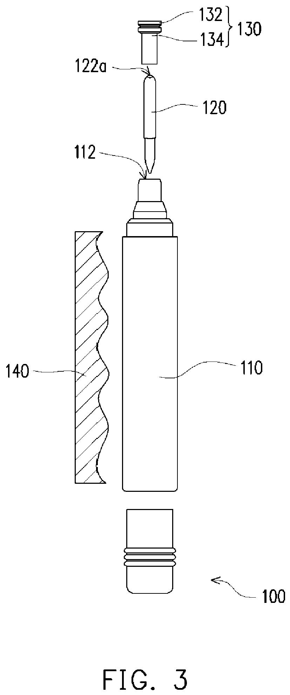

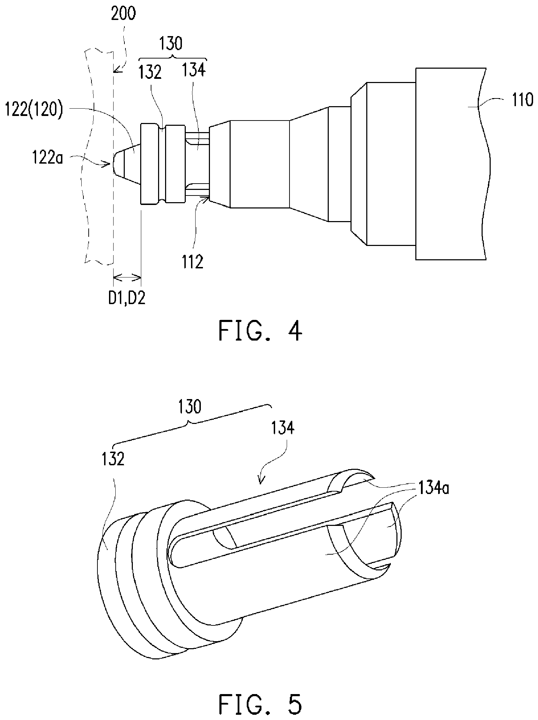

FIG. 2 is a schematic side view of the stylus of FIG. 1. FIG. 3 is an exploded view of the stylus of FIG. 2. FIG. 4 is a partially enlarged view of the stylus of FIG. 2 in an area A. With reference to FIG. 2 to FIG. 4, to be specific, the stylus 100 includes a pen rod 110, an ink core 120, and an electrically conductive element 130. The pen rod 110 has an opening 112, and a material of the pen rod 110 includes an electrically conductive material. The ink core 120 is partially disposed inside the pen rod 110 where a section 122 of the ink core 120 protrudes out of the opening 112 of the pen rod 110 and a terminal 122a of the section 122 is adapted to touch the touch writing surface 200 to form an ink script 210 (shown in FIG. 1) on the touch writing surface 200. The electrically conductive element 130 is disposed at the opening 112 of the pen rod 110, and a part of the electrically conductive element 130 is located inside the opening 112 of the pen rod 110. The pen rod 110 is electrically connected to the electrically conductive element 130. The electrically conductive element 130 includes a ring-shaped portion 132, and the ring-shaped portion 132 is located between the opening 112 of the pen rod 110 and the terminal 122a of the section 122. In addition, the stylus 100 further includes a pen cap (not shown). When the stylus 100 is not in operation, the pen cap may be sleeved on an end of the pen rod 110 with the opening 112 and can completely cover the section 122 of the ink core 120 protruding from the pen rod 110, so as to protect the protruding ink core 120, prevent dust buildup, and reduce ink evaporation and volatilization.

When the stylus 100 is in operation, the terminal 122a of the section 122 of the ink core 120 touches the touch writing surface 200 and a gap D1 is maintained between the ring-shaped portion 132 of the electrically conductive element 130 and the touch writing surface 200, such that a change in capacitance is made by the ring-shaped portion 132 at the position where the ink core 120 touches the touch writing surface 200 and a touch sensing signal is thereby generated. Besides, the touch system 10 further includes an electronic device 300 configured to receive the touch sensing signal from the touch writing surface 200. Herein, the electronic device 300 is adapted to display or store a trajectory information 310 corresponding to the ink script 210 based on the touch sensing signal. When writing is performed by the stylus 100 on the touch writing surface 200, the ink script 210 and the trajectory information 310 are generated simultaneously.

As described above, the ring-shaped portion 132 of the electrically conductive element 130 is located between the opening 112 of the pen rod 110 and the terminal 122a of the ink core 120, such that when the terminal 122a of the ink core 120 touches the touch writing surface 200, a gap D1 is maintained between the ring-shaped portion 132 of the electrically conductive element 130 and the touch writing surface 200. As such, the ring-shaped portion 132 of the electrically conductive element 130 is prevented from touching and damaging the ink script 210 formed by the ink core 120 on the touch writing surface 200. In this way, a touch sensing signal can be generated by using the electrically conductive element 130 and the touch writing surface 200 when the ink script 210 is simultaneously formed on the touch writing surface 200. In addition, the ink core 120 and the electrically conductive element 130 are both replaceable, for example, and can be replaced and maintained easily.

In this embodiment, the touch writing surface 200 is used on, for example, a reflective projection screen, a rear projection screen, a transparent display panel, or a display having a touch function, which should however not be construed as limitations to the invention. Besides, the stylus 100 may further include a decoration layer 140 as shown in FIG. 2 and FIG. 4, and the decoration layer 140 is disposed on the pen rod 110, such that the pen rod 110 may look more eye-catching. A material of the decoration layer 140 includes an electrically conductive material, for example, a color conductive paint or a conductive sticker, so that a decrease in the conductivity of the pen rod 110 caused by a non-conductive decoration layer, which would otherwise affect the operation of capacitive touch, is avoided.

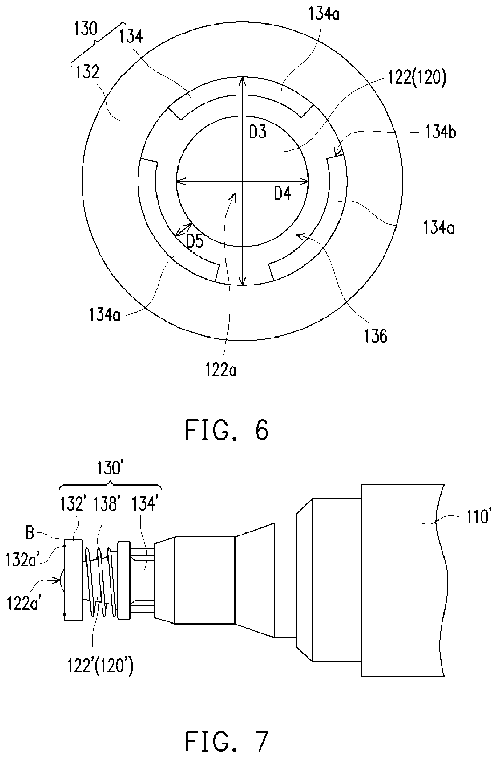

FIG. 5 is a three-dimensional view of the electrically conductive element of the stylus of FIG. 2. FIG. 6 is a top view of the stylus of FIG. 2. In order to provide clear illustration, only the ink core 120 and the electrically conductive element 130 are illustrated in FIG. 6. With reference to FIG. 2 to FIG. 6, the electrically conductive element 130 of this embodiment further includes a mounting member 134, and the mounting member 134 is connected to the ring-shaped portion 132 and is assembled to the pen rod 110. The electrically conductive element 130 is adapted to move with respect to the pen rod 110 by using the mounting member 134, such that a gap D2 between the ring-shaped portion 132 and the terminal 122a of the section 122 is changed, and a strength of the touch sensing signal can thus be adjusted as required. In this embodiment, the gap D2 between the ring-shaped portion 132 of the electrically conductive element 130 and the terminal 122a of the section 122 is, for example, greater than 0 mm and not greater than 20 mm.

To be more specifically, the mounting member 134 of this embodiment includes a plurality of flexible pieces 134a. One end of each of the flexible pieces 134a is connected to the ring-shaped portion 132, extends from the ring-shaped portion 132, enters the pen rod 110 through the opening 112, and abuts against an inner wall of the pen rod 110 by the flexible force of the flexible pieces 134a. The electrically conductive element 130 thereby abuts against the inner wall of the pen rod 110 by using the mounting member 134 and is secured to the pen rod 110. Here, the electrically conductive element 130 has a through hole 136, and the section 122 of the ink core 120 penetrates through the through hole 136 and protrudes from the ring-shaped portion 132 of the electrically connected element 130.

In this embodiment, the electrically conductive element 130 is positioned by the flexible force of the flexible pieces 134a so as to be secured to the pen rod 110. In other embodiments, the electrically conductive element 130 may also be secured to the pen rod 110 by a thread positioning structure, a magnetic levitation positioning structure, or a ratchet claw buckle positioning structure of the mounting member 134 and/or the inner wall of the pen rod 110, which should however not be construed as limitations to the invention.

With reference to FIG. 6 again, a hole diameter D3 of the through hole 136 of the electrically conductive element 130 is greater than an external diameter D4 of the ink core 120. A slot 134b is formed between any adjacent two of the flexible pieces 134a of the mounting member 134 of the electrically conductive element 130. The flexible pieces 134a surround the ink core 120, and a space D5 is provided between each of the flexible pieces 134a and the ink core 120. To be specific, since the hole diameter D3 of the through hole 136 of the electrically conductive element 130 is greater than the external diameter D4 of the ink core 120 and the space D5 is provided between each of the flexible pieces 134a and the ink core 120, an air gap allowing air flow is provided between a periphery of the ink core 120 and the inner wall of the mounting member 134 when the ink core 120 is disposed inside the pen rod 110. Therefore, the fluency of the ink from the ink core 120 may be avoided from being impacted by a negative pressure generated in a cavity of the pen rod 110 after long hours of writing.

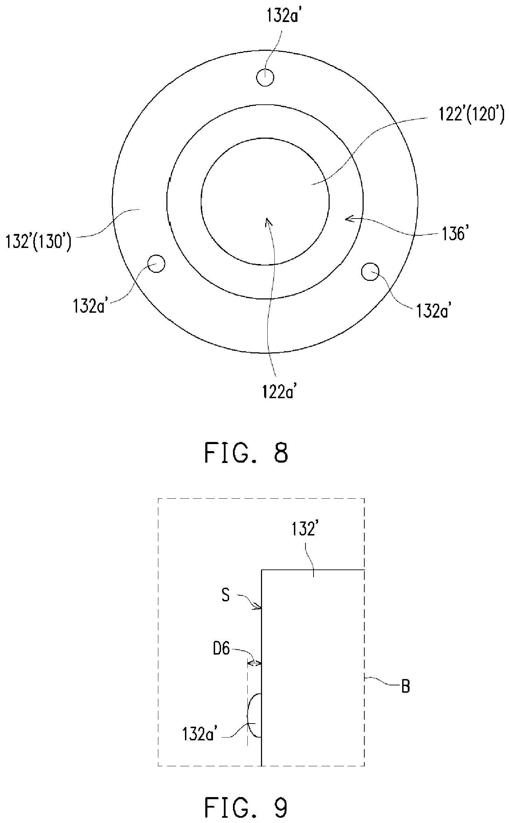

FIG. 7 is a partially enlarged view of a stylus according to another embodiment of the invention. FIG. 8 is a front view of the stylus of FIG. 7. FIG. 9 is a partially enlarged view of the stylus of FIG. 7 in an area B. In order to provide clear illustration, only an ink core 120' and an electrically conductive element 130' are illustrated in FIG. 8. In embodiments illustrated in FIG. 7 to FIG. 9, a pen rod 110', the ink core 120', a terminal 122a', a section 122', an electrically conductive element 130', a ring-shaped portion 132', a mounting member 134', a through hole 136' are disposed and operated in a manner similar to how the pen rod 110, the ink core 120, the terminal 122a, the section 122, the electrically conductive element 130, the ring-shaped portion 132, the mounting member 134, and the through hole 136 are disposed and operated. Thus, details are not repeated hereinafter. With reference to the touch system 10 of FIG. 1 simultaneously, the difference between the embodiments illustrated in FIG. 7 to FIG. 9 and those described above is that the ring-shaped portion 132' of the electrically conductive element 130' includes a plurality of protrusions 132a'(3 ones are illustrated in FIG. 8). The protrusions 132a' are made of electrically conductive materials, and the electrically conductive element 130' further includes an elastic member 138'. The protrusions 132a' protrude towards the terminal 122a' of the section 122' of the ink core 120'. When the terminal 122a' of the section 122' touches the touch writing surface 200, the protrusions 132a' touch the touch writing surface 200 and enable a gap between the ring-shaped portion 132' and the touch writing surface 200. The elastic member 138' is connected between the mounting member 134' and the ring-shaped portion 132', and the mounting member 134' is assembled to the pen rod 110'. In this embodiment, the height D6 of each of the protrusions 132a' ranges between, for example, 15 mm and 50 mm, so as to reduce a friction force between the protrusions 132a' and the touch writing surface 200. In addition, the protrusions 132a' can be designed to be ball-shaped, and/or can also be electroplated or coated with a material of a low friction coefficient. Herein, the height D6 of each of the protrusions 132a' is equal to the distance between the ring-shaped portion 132' and the touch writing surface 200, and also equal to the distance between the surface S of the ring-shaped portion 132' of the electrically conductive element 130' and a tangent plane of the terminal 122a' of the section 122' of the ink core 120' (i.e., the height of each of the protrusions 132a' protruding from the surface S). If the height D6 of each of the protrusions 132a' is less than 15 mm, the touch writing surface 200 may be subjected to be scratched. When the terminal 122a' of the section 122' touches the touch writing surface 200 and the protrusions 132a' touch the touch writing surface 200, the ink script 210 is formed on the touch writing surface 200 and the touch sensing signal is generated between the electrically conductive element 130' and the touch writing surface 200 simultaneously. Moreover, when the stylus 100' is holder by a user for writing, the stylus 100' is inclined relative to the touch writing surface 200, such that the protrusions 132a' can all be caused to touch the touch writing surface 200 by the elastic force of the elastic member 138', so as to achieve a relatively effective touch sensing function.

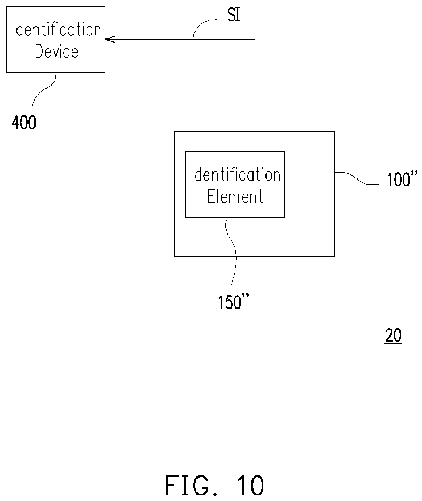

FIG. 10 is a schematic diagram of a touch system according to another embodiment of the invention. With reference to FIG. 10, a touch system 20 of this embodiment further includes an identification device 400, wherein a stylus 100" further includes an identification element 150". The identification element 150" is disposed inside the pen rod or on a portion of the stylus 100" and is configured to provide an identification signal SI to the identification device 400, such that the identification device 400 is able to identify the identification element 150". In this embodiment, the identification device 400 can be disposed on the touch writing surface and can also be disposed on the electronic device. To be specific, the identification device 400 can identify various stylus 100" (e.g., styluses with different ink colors) through the identification signal SI provided by the identification element 150".

In view of the foregoing, the embodiments of the invention have at least one of the following advantages or effects. In the stylus provided by the embodiments of the invention, the ring-shaped portion of the electrically conductive element is located between the opening of the pen rod and the terminal of the ink core, such that, when the terminal of the ink core touches the touch writing surface, the gap is maintained between the ring-shaped portion of the electrically conductive element and the touch writing surface. As such, the ring-shaped portion of the electrically conductive element is prevented from touching and damaging the ink script formed by the ink core on the touch writing surface. In this way, when the touch sensing signal is generated between the electrically conductive element and the touch sensing surface, the ink script can be simultaneously formed on the touch writing surface smoothly.

The foregoing description of the preferred embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto and their equivalents in which all terms are meant in their broadest reasonable sense unless otherwise indicated. Therefore, the term "the invention", "the present invention" or the like does not necessarily limit the claim scope to a specific embodiment, and the reference to particularly preferred exemplary embodiments of the invention does not imply a limitation on the invention, and no such limitation is to be inferred. The invention is limited only by the scope of the appended claims. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the present invention as defined by the following claims. Moreover, no element and component in the present disclosure is intended to be dedicated to the public regardless of whether the element or component is explicitly recited in the following claims.

## Claims

1. A stylus adapted for a touch writing surface having a capacitive touch function, the stylus comprising:
a pen rod, having an opening and a material thereof comprising an electrically conductive material;
an ink core, disposed inside the pen rod, wherein a section of the ink core protrudes out of the opening of the pen rod, and a terminal of the section is adapted to touch the touch writing surface to form an ink script on the touch writing surface; and
an electrically conductive element, disposed at the opening of the pen rod,
wherein the electrically conductive element comprises a ring-shaped portion and the ring-shaped portion is located between the opening of the pen rod and the terminal of the section, and
wherein when the terminal of the section touches the touch writing surface, a gap is maintained between the ring-shaped portion of the electrically conductive element and the touch writing surface and a touch sensing signal is generated.

2. The stylus as claimed in claim 1, wherein the touch sensing signal generated by the electrically conductive element is adapted to be transmitted to an electronic device by using the touch writing surface, and a trajectory information corresponding to the ink script is displayed or stored by the electronic device based on the touch sensing signal.

3. The stylus as claimed in claim 1 or 2, wherein the pen rod is electrically connected to the electrically conductive element.

4. The stylus as claimed in claim 1, 2 or 3, wherein the stylus further comprises a decoration layer, the decoration layer being disposed on the pen rod and a material thereof comprising an electrically conductive material.

5. The stylus as claimed in any one of the preceding claims, wherein the electrically conductive element has a through hole, and the section of the ink core penetrates through the through hole and protrudes from the ring-shaped portion of the electrically conductive element, preferably a hole diameter of the through hole is greater than an external diameter of the ink core.

6. The stylus as claimed in any one of the preceding claims, wherein the electrically conductive element further comprises a mounting member, the mounting member is connected to the ring-shaped portion and assembled to the pen rod, and the electrically conductive element is adapted to move with respect to the pen rod by using the mounting member so that the gap between the ring-shaped portion and the terminal of the section is changed.

7. The stylus as claimed in claim 6, wherein the mounting member comprises a plurality of flexible pieces, the plurality of flexible pieces extending from the ring-shaped portion and entering the pen rod through the opening, and the plurality of flexible pieces abuts against an inner wall of the pen rod by the flexible force of the plurality of flexible pieces.

8. The stylus as claimed in claim 7, wherein a slot is formed between any two adjacent ones of the plurality of flexible pieces, the plurality of flexible pieces surround the ink core, and a space is provided between the plurality of flexible pieces and the ink core.

9. The stylus as claimed in any one of the preceding claims, wherein the gap between the ring-shaped portion of the electrically conductive element and the terminal of the section is greater than 0 mm and not greater than 20 mm.

10. The stylus as claimed in any one of the preceding claims, wherein the ring-shaped portion comprises a plurality of protrusions, the plurality of protrusions protruding towards the terminal of the section of the ink core, and when the terminal of the section touches the touch writing surface, the plurality of protrusions touch the touch writing surface.

11. The stylus as claimed in claim 10, wherein the electrically conductive element further comprises a mounting member and an elastic member, the elastic member is connected between the mounting member and the ring-shaped portion, and the mounting member is assembled to the pen rod.

12. The stylus as claimed in claim 10, wherein the height of each of the plurality of protrusions ranges between 15 mm and 50 mm.

13. The stylus as claimed in any one of the preceding claims, further comprising an identification element, wherein the identification element is disposed inside the pen rod for providing an identification signal to an identification device.

14. A touch system comprising a touch writing surface, having a capacitive touch function; and a stylus as claimed in any one of the preceding claims.

15. The touch system as claimed in claim 14, further comprising an electronic device configured to receive the touch sensing signal from the touch writing surface, wherein the electronic device is adapted to display or store a trajectory information corresponding to the ink script based on the touch sensing signal.
